(19) Europäisches Patentamt
European Patent Office
Office européen des brevets

(11) **EP 2 859 723 B1**

(12) **EUROPEAN PATENT SPECIFICATION**

(45) Date of publication and mention
of the grant of the patent:
**11.09.2019 Bulletin 2019/37**

(21) Application number: **13727124.3**

(22) Date of filing: **31.05.2013**

(51) Int Cl.:
*H04N 7/04* (2006.01)    *H04B 7/10* (2017.01)
*H04B 7/08* (2006.01)    *H01Q 3/24* (2006.01)
*H04B 7/0413* (2017.01)    *H04B 7/0456* (2017.01)
*H04B 7/0491* (2017.01)    *H04B 7/06* (2006.01)
*H04W 72/04* (2009.01)

(86) International application number:
**PCT/EP2013/061318**

(87) International publication number:
**WO 2013/182496 (12.12.2013 Gazette 2013/50)**

(54) **MIMO SIGNAL TRANSMISSION AND RECEPTION DEVICE AND SYSTEM COMPRISING AT LEAST ONE SUCH DEVICE**

MIMO-SIGNALÜBERTRAGUNGS- UND -EMPFANGSVORRICHTUNG SOWIE SYSTEM MIT MINDESTENS EINER SOLCHEN VORRICHTUNG

DISPOSITIF D'ÉMISSION ET DE RÉCEPTION DE SIGNAUX MIMO ET SYSTÈME COMPRENANT AU MOINS UN TEL DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2012 FR 1255300**

(43) Date of publication of application:
**15.04.2015 Bulletin 2015/16**

(73) Proprietor: **InterDigital CE Patent Holdings
75017 Paris (FR)**

(72) Inventors:
• **LOUZIR, Ali
F-35576 Cesson-Sévigné (FR)**
• **LE NAOUR, Jean-Yves
F-35576 Cesson Sévigné (FR)**
• **LO HINE TONG, Dominique
F-35576 Cesson Sévigné (FR)**
• **MINARD, Philippe
F-35576 Cesson Sévigné (FR)**
• **ROBERT, Jean-Luc
F-35576 Cesson Sévigné (FR)**

(74) Representative: **Novagraaf Technologies
12 place des Halles Saint Louis
56100 Lorient (FR)**

(56) References cited:
**WO-A1-2004/093416    US-A1- 2005 146 470
US-A1- 2007 202 809    US-A1- 2010 119 002**

## Description

## Technical Field

The present invention relates to the transmission and reception of signals in a wireless, multi-antenna MIMO (Multiple Input Multiple Output) transmission system. The invention can be applied in a number of fields, such as in the field of high-bitrate home multimedia networks.

## Prior art

Current WiFi technology, even that which corresponds to the most recent standard, does not provide the same coverage quality in a home as it does in a wired network. This problem cannot be solved by increasing transmission power as, with the rise of ecology, it has become necessary to design signal transition equipment that is both robust against interference and low-energy consuming, and that emits as little electromagnetic radiation as possible. These requirements apply particularly to equipment frequently used in domestic environments, for example home gateways and set-top boxes.

The technology used most frequently in this equipment to transmit signals is MIMO technology. This technology is known to increase transmission capacities by multiplying signal transmission paths and improve the robustness of transmission using spatial multiplexing and spatio-temporal coding techniques.

MIMO technology involves transmitting and receiving signals using a plurality of transmission channels with different characteristics to obtain separate signals and therefore increase the probability of at least one signal not being affected by fading. Signals are received or transmitted via a plurality of radio channels associated with a plurality of antennas.

For example, it is known from US2010/119002, an antenna system with one or several multi sector antennas where each sector is associated with a classical MIMO device. Additionally, document WO 2004093416 discloses multiple directional antenna sectors, each including 3-D space for transmitting/receiving electromagnetic signals. A receiving controller coupled to one of the sectors measures received electromagnetic signal characteristics. A transmitting controller coupled to one of the sectors transmits a data packet related to the characteristics via the sector selected by the controller.

The speed of the signals transmitted or received by the device may be increased by increasing the device's number of radio channels at the expense of energy consumption. Energy consumption generally increases exponentially with the number of radio channels. The energy consumption of each radio channel essentially results from the power amplifier, which consumes around 1W due to the low energy efficiency of the OFDM modulation used in WiFi, which forces the amplifier to function well below saturation with increased back-off.

It is, moreover, well known that MIMO technology becomes less efficient in environments dominated by interference. And yet, with the constantly increasing amount of wireless equipment in homes, it has become essential to improve this technique for the transmission of signals in domestic environments.

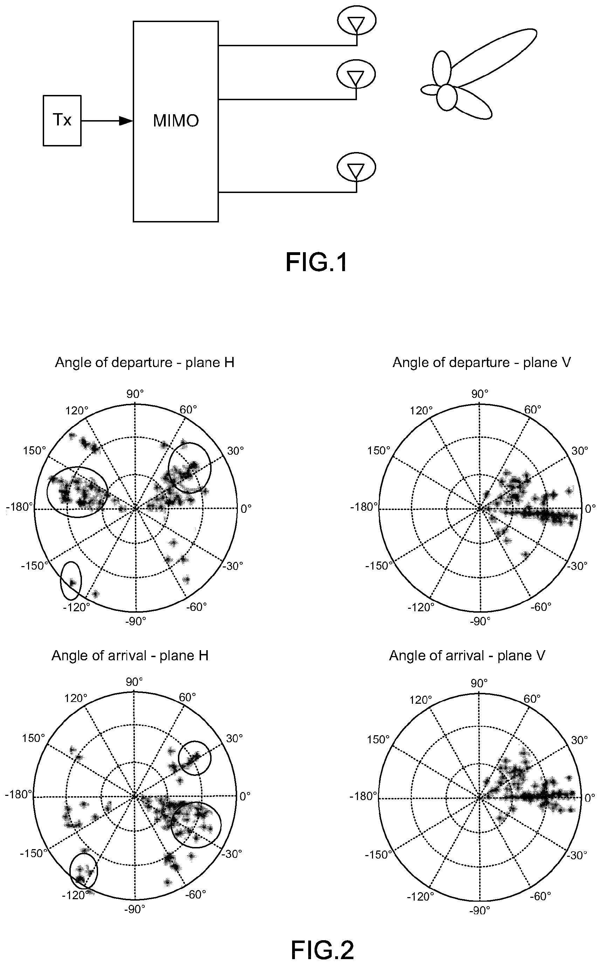

An MIMO beamforming technique, illustrated in figure 1, has therefore been developed for MIMO transmission in noisy environments. As shown in figure 1, this solution uses a plurality of omnidirectional antennas connected to the inputs/outputs of the MIMO chip. These antennas are controlled together to obtain a radiation pattern with maximal values in the desired propagation directions and minimal values in the unwanted propagation directions. According to this technique, the form of the radiation pattern is obtained through signal processing in the MIMO chip.

Although this technique is used to obtain the desired radiation patterns, this solution is inadequate for the following reasons:

- during reception, any jammers and interferences picked up by the equipment's omnidirectional antennas are always present on radio channels and lead to saturation, dynamic linearity and noise problems, which deteriorate the receiver's sensitivity,

- in addition, irrespective of the calculation power allocated to the MIMO chip for beamforming, the radiation pattern that can be achieved depends greatly on the number of antennas (or radiation elements), the geometric availability of antennas in relation to each other and the performances of each antenna in relation to each other; indeed, a relatively high minimal number of antennas is generally required to obtain the desired radiation pattern form; but, increasing the number of antennas, of which there can be up to 8 in the standard Wifi 11n case, means increasing the number of radio transmission and reception channels in the MIMO chip, which increases the cost and consumption of the equipment,

- moreover, the geometry of the network of antennas and the type of antenna are determined in the circuit integration phase and are often dependent on the form and size of the printed circuit card and the space remaining on this card for the antennas, which means that certain geometries are not possible.

## Description of the invention

One purpose of the invention is to provide a multi-antenna device capable of transmitting and receiving MIMO signals to overcome some or all of the aforementioned disadvantages.

More specifically, a purpose of the invention is to provide a multi-antenna device capable of transmitting and receiving MIMO signals that is efficient in terms of speed and robust in environments dominated by interferences, and which transmits the least possible electromagnetic radiation into the environment in which it is placed.

The invention is defined by the independent claims. Further embodiments are defined by the dependent claims.

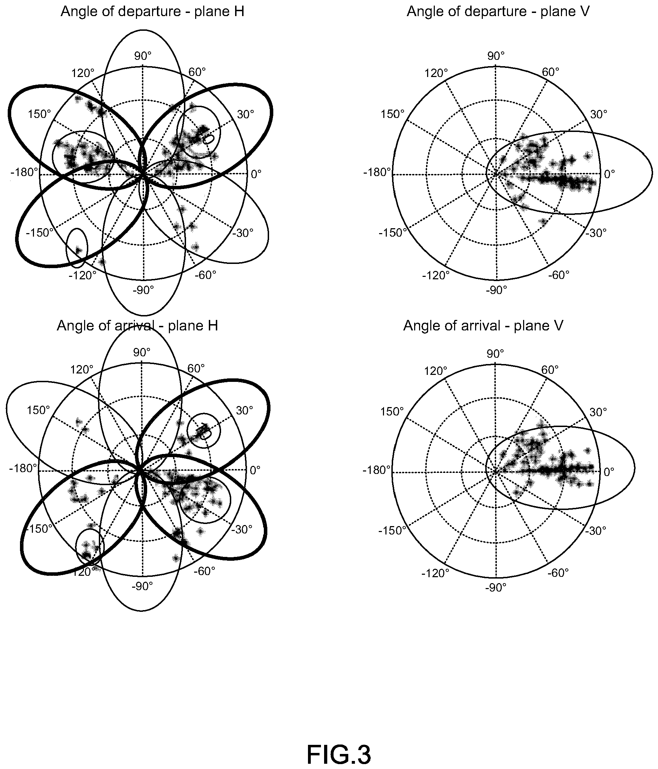

For this purpose, the invention proposes to use the cluster propagation phenomenon illustrated in figure 2. This figure represents the angles of departure and angles of arrival, in terms of a MIMO device's antennas, in signals being propagated inside a building. These angles are presented in the horizontal plane (plane H) and vertical plane (plane V) of the antenna. As shown in this figure, signal energy is essentially propagated in a reduced number of directions known as prioritized directions. This means that, from the receiver side, the radiations arriving at the antennas with significant energy are found in a limited number of angular sectors in plane H and plane V and, when the transmission paths of these radiations are followed to the transmitter, these radiations also correspond to radiations transmitted in a limited number of angular sectors in plane H and plane V. If plane H is cut into angular sectors of around 60° as illustrated in figure 3, this shows, in this propagation example, that the significant radiations received by the receiver are present in the angular sectors [0°,60°], [-180,°-120°] and [-60°,0°]. These radiations are transmitted in the transmitter in angular sectors [0°,60°], [120°,180°] and [-180°,-120°] of plane H (Horizont)a For all of these sectors, in transmission and reception, the opening in plane V (Vertical) is around 60° and corresponds to the sector [-30°,30°] of plane V The radiations transmitted in other angular sectors do not reach, or only very partially reach, the receiver. The energy of these sectors is therefore wasted and unnecessarily contributes to increasing background noise and interferences.

Also, according to the invention, it is proposed to replace the omnidirectional antennas of the MIMO signal transmission and reception devices with controlled multi-sector antennas to function solely in angular sectors corresponding to the clusters identified for the environment in which they are present.

The invention is therefore intended for a signal transmission and/or reception device in a MIMO system consisting of:

- a MIMO module consisting of N inputs/outputs to deliver or receive N signals, N being greater than or equal to 2;
- an antenna system to transmit or receive said N signals,

characterized in that the antenna system consists of at least one so-called multi-sector antenna, with M angular sectors in a horizontal plane capable of selectively receiving and/or transmitting said N signals in one or more of said M angular sectors, said M angular sectors not overlapping each other and together forming a global angular sector of 360 degrees, where M>N,

and in that the device also consists of switching means, mounted between the MIMO module and the antenna system to connect each of the N inputs/outputs of the MIMO module with P angular sectors of the at least one multi-sector antenna, where 1≤P<M, according to a switching diagram determined using control means in accordance with a criteria representing the quality of the reception of signals by said device or another device.

As such, according to the invention, the device transmits and/ receives the N signals in a reduced number (=P) of angular sectors from the M angular sectors of the multi-sector antenna. As such, in transmission, the device does not transmit signals in every direction, but only in the predefined prioritized directions, which reduces the quantity of electromagnetic waves transmitted and concentrates the energy transmitted in the prioritized directions. In reception, the device only receives the signals from these prioritized directions, which reduces the cost of signal processing as well as the energy consumption of the device.

According to a first embodiment, the antenna system consists of N multi-sector antennas with M angular sectors and the switching means consisting of N switching circuits, each input/output of the MIMO module being connected to one of said N multi-sector antennas via one of said N switching circuits.

Each of said N multi-sector antennas includes Q inputs/outputs, Q being less than or equal to $2^M-1$, each of said Q inputs/outputs being connected to a specific combination of angular sectors of the multi-sector antenna.

Advantageously, for each multi-sector antenna, no more than D angular sectors are connected via a switching circuit to an input/output of the MIMO module, where D<M. The number D corresponds to the maximum number of prioritized directions accepted by the device. For example, it can be considered that the device will use a maximum of 3 prioritized directions. D can therefore be fixed at 3. In this case, it is not necessary for the antennas to contain $2^M-1$ inputs. $Q = \sum_{A=1}^{D} \frac{M!}{A!(M-A)!}$ inputs/outputs may therefore suffice for the antennas.

Advantageously, M is at least equal to 4 and D is at most equal to 3.

According to a second embodiment, the antenna system consists of a multi-sector antenna with M angular sectors, where M>N, and the switching means consist of a switching circuit, said multi-sector antenna consisting of M inputs/outputs, each one connected to an angular sector of said antenna, said switching circuit being intended to selectively connect N antenna inputs/outputs to N inputs/outputs of the MIMO module. This embodiment is sub-optimal but reduces the number of device components.

Regardless of the embodiment, the number M of angular sectors of the multi-sector antennas is preferably equal to 6 as it has been discovered that, statistically, the angular opening of a cluster in plane H is typically 60°. 6 sectors are therefore typically required to cover the entire space (360°). Moreover, each sector has an angular opening in the vertical plane of 60°. In certain situations, it may be worth increasing the number of sectors, but 6 sectors represents a good compromise in terms of complexity-performance and cost-performance.

According to the invention, the M angular sectors of said at least one multi-sector antenna present identical openings in a vertical plane. The M angular sectors each present an opening of at least 120° between the -60° and +60° angles in the vertical plane. Preferably, they each present an opening of at least 60° between the -30° and +30° agles in the vertical plane.

Experts in the field may note other advantages when studying the following examples, illustrated in the figures appended, provided by way of example.

**Brief description of the figures**

- Figure 1 represents the diagram of a MIMO signal transmission device implementing a beamforming technique,
- Figure 2 shows, in diagram form, the angle of departure and the angle of arrival in plane H and plane V of the signals transmitted and received in a domestic environment,
- Figure 3 represents the diagrams of figure 2 in which prioritized signal propagation directions have been identified,
- Figure 4 represents a diagram of a first embodiment for a device according to the invention,
- Figure 5 represents a diagram of a second embodiment for a device according to the invention,
- Figure 6 illustrates the functioning of a MIMO system consisting of two devices in accordance with figure 4 in the case where M=6, N=2 and D=2, and
- Figure 7 illustrates the functioning of a MIMO system consisting of two devices in accordance with figure 5 in the case where M=6, N=2 and D=2.

**Detailed description of an embodiment**

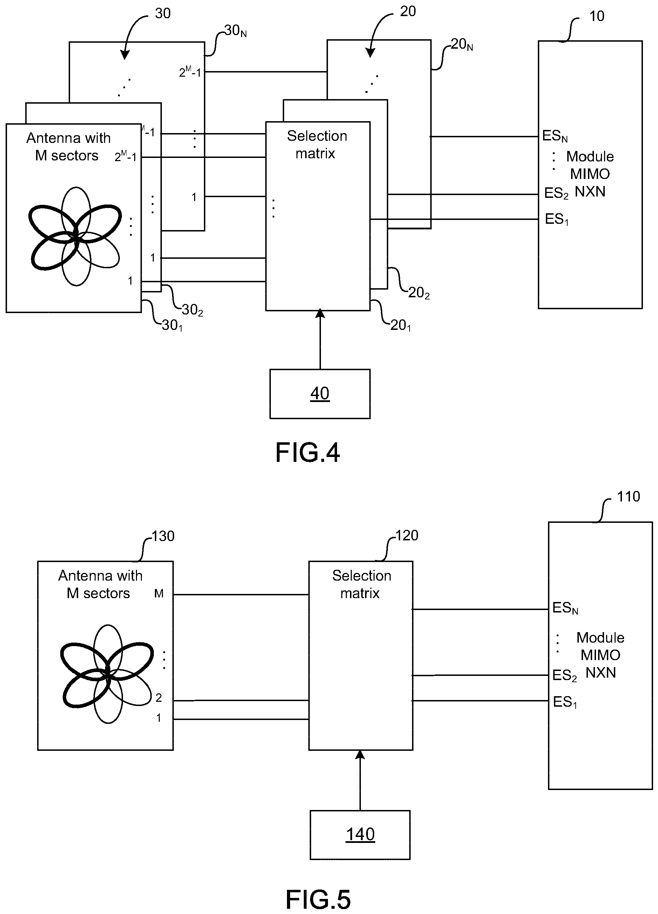

In reference to figure 4, the invention device includes:

- a MIMO module 10 consisting of N inputs/outputs $ES_1...ES_N$ to deliver or receive N signals, N being greater than or equal to 2,
- an antenna system 30 consisting of N multi-sector antennas $30_1... 30_N$ for transmitting or receiving N signals, each antenna consisting of M angular sectors, and
- switching means 20 mounted between the antenna system and the MIMO module and consisting of N

switching circuits $20_1...20_N$.

Each input/output $ES_i$ of the MIMO module is connected to inputs/outputs of the antenna $30_i$ via the switching circuit $20_i$, with $i \in [1..N]$. The inputs/outputs of the antenna $30_i$, which are connected to the output $ES_i$ of the MIMO module, are selected using a switching diagram implemented by the switching circuit $20_i$. This diagram is determined using control means 40 according to a signal reception quality criterion.

Each antenna $30_i$ includes, in plane H, M angular sectors sensitively not overlapping each other and together forming a global angular sector of 360 degrees. Each antenna $30_i$ is capable of selectively transmitting or receiving signals in P angular sectors, where $1 \leq P < M$. Each angular sector or combination of angular sectors corresponds to a specific radiation diagram.

Each antenna $30_i$ also includes $Q=2^M-1$ inputs, each one connected to a specific combination of angular sectors from the $2^M-1$ possible combinations of angular sectors of the antenna. Inputs/outputs that are not connected to any sector are excluded.

The P angular sectors through which the MIMO signal associated with the input $ES_i$ is transmitted or received are selected using the switching circuit $20_i$ according to a switching diagram determined using control means. The switching circuit $20_i$ is used to connect the $ES_i$ input/output with the input/output of antenna $30_i$, which is connected to the selected P angular sectors.

The switching diagram used by the switching circuit $20_i$ is determined using control means 40. These control means 40 may be included in the MIMO module 10. This is determined using an algorithm based on MIMO signal reception quality used by the device if concerned with a transmission/reception device or by the MIMO signal reception device if the present device is only a MIMO signal transmission device. The signal reception quality can be defined using one or more values provided by the MIMO value, particularly the RSSI (Received Signal Strength Indication) value, the SINR (Signal to Interference plus Noise Ratio) value, the BER (Bit Error Rate) and the PER (Packet Error Rate).

As can be seen in figures 2 and 3, the number of prioritized signal propagation directions in plane H is generally reduced. In the example of figures 2 and 3 corresponding to an antenna with 6 angular sectors in plane H, this number of prioritized directions is equal to 3 in plane H. To simplify the switching circuits and reduce the number of inputs/outputs of each antenna $30_i$, it is possible to provide the simultaneous connection of up to D inputs/outputs of antenna $30_i$ at the input/output $ES_i$ of the MIMO module, D being the maximum number of prioritized directions permitted. It is considered, for example, that D will be less than or equal to 3 or 4. The number of inputs/outputs of antenna $30_i$ can then be reduced to

$$\sum_{A=1}^{D} \frac{M!}{A!(M-A)!},$$ each input/output being connected to up to D angular sectors, and the number of switching diagrams that switching circuit $20_i$ must implement can also be reduced to $$\sum_{A=1}^{D} \frac{M!}{A!(M-A)!}.$$

The invention device can be simplified to further reduce its cost, as illustrated in figure 5. In this figure, the device consists of just one multi-sector antenna 130, with M angular sectors where M>N, which is connected to an MIMO module 110 via a single switching circuit 120. The MIMO module 110 consists of N inputs/outputs $ES_i$ and antenna 130 includes M inputs/outputs each connected to a specific angular sector from the M angular sectors. The switching circuit 120 connects the N inputs/outputs $ES_i$ with N inputs/outputs of antenna 130 according to a switching circuit selected using control means 140. In this embodiment, each of the N MIMO signals is received or transmitted via its own angular sector from the M angular sectors of antenna 130. The angular sectors selected by the control methods 140 each correspond to a prioritized signal propagation direction. In the case of a 2x2 MIMO module, the 2 MIMO signals are each transmitted or received in its own angular sector corresponding to a prioritized signal propagation direction. The control means 140 must then have at least two prioritized directions determined.

Regardless of the embodiment (figure 4 or figure 5), the antenna $30_i$ or 130 includes at least M=4 angular sectors, preferably M=6 angular sectors.

In the M=6 case, the width of the angular sectors is about 60° in the horizontal plane and between -30° and +30° in the vertical plane (or elevation plane).

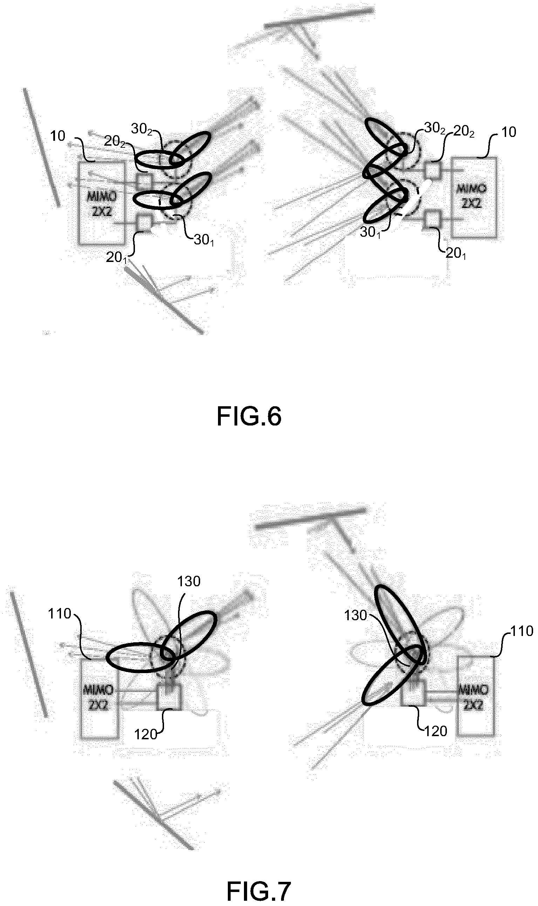

Figures 6 and 7 illustrate the functioning of a system containing transmission and reception devices in accordance with figure 4 (respectively figure 5). These devices include 2x2 MIMO modules (N=2) and antennas with 6 angular sectors (M=6). Two prioritized propagation directions corresponding to two clusters have been identified. The angular sectors selected by the devices correspond to these clusters.

The angular sectors used by the devices in figure 7 are, for example, selected in the following way. A and B indicate the two system devices. This selection comprises two steps:

- during the first step, device B transmits learning symbols through each of the possible configurations (or combinations) of N sectors from M angular sectors; device A listens for the learning symbols transmitted by device B and determines, for each configuration of N sectors from M transmission sectors (device B) and each configuration of N sectors from N reception sectors (device A), a quality indicator (RSSI or SINR or BER or PER); in total, $$\left[\frac{M!}{N!(M-N)!}\right]^{2}$$ quality indicators are determined; the configuration showing the highest quality indicator is selected for device A in order to communicate with device B;

- during the second step, device A transmits learning signals with the configuration selected during the first step; device B listens for the learning symbols transmitted by device A and determines a quality indicator (RSSI or SINR or BER or PER) for each possible configuration of N sectors from M reception sectors; $$\frac{M!}{N!(M-N)!}$$ quality indicators are then determined and the configuration showing the highest quality indicator is selected for device B in order to communicate with device A. It should be noted that the SINR indicator appears to be the most suitable indicator in an environment dominated by interferences.

The second step or both steps can be repeated periodically in order to take into account changes in the propagation environment. As an alternative, in order to reduce the frequency of system reconfigurations (frequency of learning procedure launches), it may be decided to maintain the configurations of devices A and B while the transmission channel varies slightly, in other words so that the quality indicator does not fall below a predefined limit.

It should be noted that the invention device is capable of functioning with a classic device consisting of a conventional omnidirectional antenna, a portable device, for example. If A indicates the invention device and B indicates the classic device, the learning phase takes place as follows. Device A listens for the learning symbols transmitted by device B through its omnidirectional antenna and determines, for each configuration (or combination) of N sectors from M sectors, a quality criterion (RSSI or SINR or BER or PER). $$\frac{M!}{N!(M-N)!}$$ quality indicators are thus determined and the configuration with the highest quality indicator is selected for device A in order to communicate with device B.

When device A or B include N multi-sector antennas and N switching circuits (figures 4 and 6), the learning is carried out as before except that the $$\frac{M!}{N!(M-N)!}$$ configurations are tested via the N antennas and the N switching circuits.

Compared with the existing MIMO devices consisting of omnidirectional antennas and using the beamforming technique, the invention device provides the following advantages:

- the interference rate is reduced in the front radio channel (directive antennas) and reduces the risk of saturation or disturbance of the radio channels of the MIMO module,
- the number of MIMO channels (=N) can be limited by a "smart" selection of the selected angular sectors and reduce the total consumption of the device.

Moreover, as the invention device consists of N multi-sector antennas and N switching circuits (corresponding to figures 4 and 6), signal transmission is also improved. The expected gain is equal to around GTx+GRx, where GTx corresponds to the gain in transmission and GRx corresponds to the gain in reception.

With respect to the invention device consisting of 1 sole antenna and 1 sole switching circuit, the expected gain is lower, in the order of GTx+GRx-10 logN, N being the number of MIMO chains, but the structure of the device is less complex.

Although the invention has been described in relation to different particular embodiments, it is obvious that it is in no way restricted and that it comprises all the technical equivalents of the means described together with their combinations if the latter fall within the scope of the invention.

## Claims

1. Device for the transmission and/or reception of signals in a MIMO system comprising

   - a MIMO module (10, 110) comprising N inputs/outputs to deliver or receive N signals, N being greater than or equal to 2;
   - an antenna system (30, 130) to transmit or receive said N signals,

   wherein the antenna system comprises at least one multi-sector antenna ($30_1...30_N$, 130), with M angular sectors in a horizontal plane capable of selectively receiving and/or transmitting said N signals in one or more of said M angular sectors, said M angular sectors not overlapping each other and together forming a global angular sector of 360 degrees, where M>N,
   and in that the device further comprises switching means (20; 120), mounted between the MIMO module and the antenna system, to connect P angular sectors of the at least one multi-sector antenna, with $1 \leq P < M$, with each of the N inputs/outputs of the MIMO module according to a switching diagram determined using control means in accordance with a criteria representing the quality of the reception of signals by said device or another device, and wherein the device transmits and/or receives the N signals in a reduced number of angular sectors from the M angular sectors of the multi-sector antenna.

2. Device according to claim 1, wherein the antenna system (30) comprises N multi-sector antennas ($30_1...30_N$) with M angular sectors and the switching means comprises N switching circuits ($20_1...20_N$), each input/output of the MIMO module being connected to one of said N multi-sector antennas via one of said N switching circuits.

3. Device according to claim 2, wherein each of said N multi-sector antennas includes Q inputs/outputs, Q being less than or equal to $2^M-1$, each of said Q inputs/outputs being connected to a specific combination of angular sectors of the multi-sector antenna.

4. Device according to claim 2, wherein, for each multi-sector antenna, up to D angular sectors are connected via a switching circuit to a MIMO module input/output, where D<M.

5. Device according to claim 4, wherein each of said N multi-sector antennas includes Q inputs/outputs, Q being equal to $\sum_{A=1}^{D} \dfrac{M!}{A!(M-A)!}$ , each of said Q inputs/outputs being connected to a specific combination of angular sectors of the multi-sector antenna.

6. Device according to claim 4 or 5 wherein M is at least equal to 4 and D is at least equal to 3.

7. Device according to claim 1, wherein the antenna system comprises a multi-sector antenna (130) with M angular sectors, where M>N, and the switching means comprises a switching circuit (120), said multi-sector antenna comprising M inputs/outputs, each input/output being connected to an angular sector of said antenna, said switching circuit being configured to selectively connect N antenna inputs/outputs to N inputs/outputs of the MIMO module.

8. Device according to any one of the preceding claims, wherein M is equal to 6, each angular sector presenting an opening of around 60° in the horizontal plane.

9. Device according to any one of the preceding claims, wherein the M angular sectors of the at least one multi-sector antenna present identical openings in a vertical plane.

10. Device according to claim 9, wherein the M angular sectors each present an opening of up to 120° between -60° and +60° in the vertical plane, preferably an opening of 60° inclusive between the angles -30° and +30° in the vertical plane.

**Patentansprüche**

1. Vorrichtung für das Übertragen und/oder Empfangen von Signalen in einem MIMO System, umfassend:

   - ein MIMO Modul (10, 110) umfassend N Eingaben/Ausgaben, um N Signale zu senden oder zu empfangen, wobei N größer als oder gleich 2 ist;
   - ein Antennensystem (30, 130), um die N Signale zu übertragen oder zu empfangen, wobei das Antennensystem mindestens eine Multisektorenantenne umfasst ($30_1$... $30_N$, 130), wobei die M Winkelsektoren in einer horizontalen Ebene die N Signale in einem oder mehreren der M Winkelsektoren selektiv empfangen und/oder übertragen können, wobei die M Winkelsektoren einander nicht überlappen und gemeinsam einen globalen Winkelsektor von 360 Grad bilden, wobei M>N ist,

   und wobei die Vorrichtung ferner Schaltmittel (20; 120) umfasst, die zwischen dem MIMO Modul und dem Antennensystem montiert sind, um P Winkelsektoren der letzten einen Multisektorenantenne mit $1 \leq P < M$ mit jeder der N Eingaben/Ausgaben des MIMO Moduls gemäß einem Schaltdiagramm zu verbinden, das bestimmt ist, Steuerungsmittel in Übereinstimmung mit einem Kriterium zu nutzen, das die Qualität des Empfangens von Signalen durch die Vorrichtung oder eine andere Vorrichtung repräsentiert, und wobei die Vorrichtung die N Signale in einer reduzierten Anzahl von Winkelsektoren von den M Winkelsektoren der Multisektorenantenne überträgt und/oder empfängt.

2. Vorrichtung nach Anspruch 1, wobei das Antennensystem (30) N Multisektorenantennen ($30_1$... $30_N$) mit M Winkelsektoren umfasst und das Schaltmittel N Schaltkreise ($20_1$... $20_N$) umfasst, wobei jede Eingabe/Ausgabe des MIMO Moduls mit einer der N Multisektorenantennen über einen der N Schaltkreise verbunden ist.

3. Vorrichtung nach Anspruch 2, wobei jede der N Multisektorenantennen Q Eingaben/Ausgaben einschließt, wobei Q weniger als oder gleich $2^M - 1$ ist, wobei jede der Q Eingaben/Ausgaben mit einer spezifischen Kombination von Winkelsektoren der Multisektorenantenne verbunden ist.

4. Vorrichtung nach Anspruch 2, wobei für jede Multisektorenantenne bis zu D Winkelsektoren über einen Schaltkreis mit einer MIMO Modul Eingabe/Ausgabe verbunden sind, wobei D<M ist.

5. Vorrichtung nach Anspruch 4, wobei jeder der N Multisektorenantennen Q Eingaben/Ausgaben einschließt, wobei Q gleich $\sum_{A=1}^{D} \frac{M!}{A!(M-A)!}$ ist, wobei jede der Q Eingaben/Ausgaben mit einer spezifischen Kombination von Winkelsektoren der Multisektorenantenne verbunden ist.

6. Vorrichtung nach Anspruch 4 oder 5, wobei M mindestens gleich 4 und D mindestens gleich 3 ist.

7. Vorrichtung nach Anspruch 1, wobei das Antennensystem eine Multisektorenantenne (130) mit M Winkelsektoren umfasst, wobei M>N ist, und das Schaltmittel einen Schaltkreis (120) umfasst, wobei die Multisektorenantenne M Eingaben/Ausgaben umfasst, wobei jede Eingabe/Ausgabe mit einem Winkelsektor der Antenne verbunden ist, wobei der Schaltkreis dafür konfiguriert ist, selektiv N Antennen-Eingaben/Ausgaben mit N Eingaben/Ausgaben des MIMO Moduls zu verbinden.

8. Vorrichtung nach einem der vorhergehenden Ansprüche, wobei M gleich 6 ist, wobei jeder Winkelsektor eine Öffnung von ungefähr 60° in der horizontalen Ebene darstellt.

9. Vorrichtung nach einem der vorhergehenden Ansprüche, wobei die M Winkelsektoren der mindestens einen Multisektorenantenne identische Öffnungen in einer vertikalen Ebene darstellen.

10. Vorrichtung nach Anspruch 9, wobei die M Winkelsektoren jeweils eine Öffnung von bis zu 120° zwischen -60° und +60° in der vertikalen Ebene darstellen, vorzugsweise eine Öffnung von 60° einschließlich zwischen den Winkeln -30° und +30° in der vertikalen Ebene.

**Revendications**

1. Dispositif d'émission et/ou de réception de signaux dans un système MIMO comprenant

   - un module MIMO (10, 110) comprenant N entrées/sorties pour émettre ou recevoir N signaux, N étant supérieur ou égal à 2 ;
   - un système d'antennes (30, 130) pour émettre ou recevoir lesdits N signaux,

   dans lequel le système d'antennes comprend au moins une antenne multi-secteur (30i...30n, 130) avec M secteurs angulaires dans un plan horizontal capable d'émettre et/ou de recevoir de façon sélective lesdits N signaux dans un ou plusieurs desdits M secteurs angulaires, lesdits M secteurs angulaires ne se chevauchant pas et formant ensemble un secteur angulaire global de 360 degrés, où M > N, et dans lequel le dispositif comprend en outre un moyen de commutation (20 ; 120), monté entre le module MIMO et le système d'antennes, pour connecter P secteurs angulaires de l'au moins une antenne multi-secteur, avec 1 < P < M, avec chacune des N entrées/sorties du module MIMO selon un schéma de commutation déterminé à l'aide d'un moyen de contrôle en fonction d'un critère représentant la qualité de la réception de signaux par ledit dispositif ou un autre dispositif, et dans lequel le dispositif émet et/ou reçoit les N signaux dans un nombre réduit de secteurs angulaires parmi les M secteurs angulaires de l'antenne multisecteur.

2. Dispositif selon la revendication 1, dans lequel le système d'antennes (30) comprend N antennes multi-secteurs (30i...30n) avec M secteurs angulaires et le moyen de commutation comprend N circuits de commutation (20i...20n), chaque entrée/sortie du module MIMO étant connectée à l'une desdites N antennes multi-secteurs via l'un desdits N circuits de commutation.

3. Dispositif selon la revendication 2, dans lequel chacune desdites N antennes multi-secteurs inclut Q entrées/sorties, Q étant inférieur ou égal à $2^M-1$, chacune desdites Q entrées/sorties étant connectée à une combinaison spécifique de secteurs angulaires de l'antenne multi-secteur.

4. Dispositif selon la revendication 2, dans lequel pour chaque antenne multi-secteur, jusqu'à D secteurs angulaires sont connectés via un circuit de commutation à une entrée/sortie de module MIMO, où D < M.

5. Dispositif selon la revendication 4, dans lequel chacune desdites N antennes multi-secteurs inclut Q entrées/sorties, Q étant égal à

$$\sum_{A=1}^{D} \frac{M!}{A!(M-A)!},$$

chacune desdites Q entrées/sorties étant connectée à une combinaison spécifique de secteurs angulaires de l'antenne multisecteur.

6. Dispositif selon la revendication 4 ou 5, dans lequel M est au moins égal à 4 et D est au moins égal à 3.

7. Dispositif selon la revendication 1, dans lequel le système d'antennes comprend une antenne multisecteur (130) avec M secteurs angulaires, où M > N, et le moyen de commutation comprend en circuit de commutation (120), ladite antenne multi-secteur comprenant M entrées/sorties, chaque entrée/sortie étant connectée à un secteur angulaire de ladite antenne, ledit circuit de commutation étant configuré pour connecter de façon sélective N entrées/sorties d'antenne à N entrées/sorties du module MIMO.

8. Dispositif selon l'une quelconque des revendications précédentes, dans lequel M est égal à 6, chaque secteur angulaire présentant une ouverture d'environ 60° dans le plan horizontal.

9. Dispositif selon l'une quelconque des revendications précédentes, dans lequel les M secteurs angulaires de l'au moins une antenne multi-secteur présentent des ouvertures identiques dans un plan vertical.

10. Dispositif selon la revendication 9, dans lequel les M secteurs angulaires présentent chacun une ouverture pouvant atteindre 120° entre -60° et +60° dans le plan vertical, de préférence une ouverture de 60° comprise entre les angles -30° et +30° dans le plan vertical.

FIG.1

Angle of departure - plane H

Angle of departure - plane V

Angle of arrival - plane H

Angle of arrival - plane V

FIG.2

FIG.3

FIG.4

FIG.5

FIG.6

FIG.7

**Patent documents cited in the description**

- US 2010119002 A

- WO 2004093416 A